# FASCICULE DE BREVET EUROPEEN

(11) **EP 1 463 351 B1**
(45) Date de publication et mention de la délivrance du brevet: **05.11.2008**
(21) Numéro de dépôt: 04290731.1
(22) Date de dépôt: 17.03.2004
(51) Int. Cl.: H04Q 7/32

(54) **Procédé de déblocage d'un terminal de télécommunication sans fil de type téléphone portable**
Verfahren zum Entsperren eines portablen drahtlosen Kommunikationsendgerätes
Method for unblocking a portable wireless telecommunications terminal

(30) Priorité: 26.03.2003 FR 0303690
(43) Date de publication de la demande: 29.09.2004
(73) Titulaire: T & A Mobile Phones Limited, Kowloon (HK)
(72) Inventeur: Dupuis, Thierry, 92500 Rueil Malmaison (FR); Guirauton, Alain, 95100 Argenteuil (FR)
(74) Mandataire: Feray, Valérie

(56) Documents cités:
- EP-A- 1 061 755
- EP-A- 1 263 248
- WO-A-98/57511
- US-A- 6 124 799

## Description

La présente invention se rapporte aux procédés qui permettent de débloquer les terminaux de télécommunication sans fil de type téléphones portables ou mobiles.

L'invention s'applique à tout terminal de télécommunication compatible avec les technologies réseaux à savoir DECT, CDMA, WCDMA, GSM, UMTS etc.

On entend par terminal de télécommunication de type portable ou mobile, tout appareil associé à une carte à circuit(s) intégré(s) dite carte à puce et classiquement appelée carte SIM (Subscriber Identity Module) ou (U)SIM.

L'invention concerne plus précisément les systèmes de blocage des téléphones portables connus sous l'appellation anglo-saxonne "SIM-LOCK" et qui ont été définis par l'ETSI.

Un système de blocage peut permettre les actions suivantes :
- le verrouillage du téléphone portable pour une utilisation des services d'un opérateur particulier ;
- le verrouillage du téléphone portable à des services particuliers d'un opérateur donné ;
- le verrouillage du téléphone portable sur une puce donnée d'une carte SIM ce qui permet d'empêcher le fonctionnement d'un téléphone portable avec une carte à puce autre que celle avec laquelle le téléphone a été vendu.

Le système de verrouillage permet généralement à l'opérateur de s'assurer que le client qui a acheté son téléphone dans le cadre d'une opération promotionnelle, où ce téléphone est vendu à un prix très réduit sous la condition d'utiliser un abonnement particulier pendant une période relativement longue, respectera les termes de son contrat. On peut aussi de cette manière résoudre d'autres problèmes, par exemple l'utilisation d'un téléphone volé avec une autre carte à puce.

Il est néanmoins nécessaire de prévoir des dispositions permettant de supprimer ce blocage, par exemple à la fin du contrat.

Une information spécifique dénommée ci-après clé de blocage, étant introduite dans le téléphone par le fabricant lors de la fabrication de ce téléphone, et les problèmes de déblocage se situant essentiellement au niveau des relations entre l'utilisateur du téléphone et l'opérateur téléphonique, la pratique courante consiste à communiquer la liste des clés par le fabricant à l'opérateur. Ce dernier procède alors au déblocage sur requête de l'usager, après vérification des droits.

On connait du document EP 1 263 248 A1 un procédé selon le préambule de la revendication 1, dans lequel l'opérateur transmet au téléphone portable l'information de déblocage.

Le transfert des clés de déblocage nécessite des échanges sécurisés entre les fabricants et les opérateurs.

Comme il n'y a pas généralement d'exclusivité entre ceux-ci, chaque fabricant fournit tous les opérateurs, et vice versa. La sécurité des échanges n'est pas assurée.

En outre le nombre des modèles de téléphones augmente chaque jour. Les problèmes de communication sont donc très importants et entraînent de graves dysfonctionnements et des réclamations très nombreuses de la part des usagers.

Pour résoudre ces problèmes, l'invention propose un procédé de déblocage d'un téléphone portable tel que défini dans la revendication 1.

Selon une autre caractéristique, ledit fabricant vérifie auprès de l'opérateur utilisé par l'usager les droits de celui-ci au déblocage.

Selon une autre caractéristique, la demande de déblocage est adressée par l'usager au fabricant par l'intermédiaire de l'opérateur de manière transparente pour ce dernier.

Selon une autre caractéristique, l'information de déblocage est adressée par le fabricant à l'usager par l'intermédiaire de l'opérateur de manière transparente pour ce dernier.

Selon une autre caractéristique, le fabricant adresse à l'usager un message de confirmation contenant des indications sur les opérations effectuées.

Selon une autre caractéristique, le fabricant adresse à l'opérateur un message de confirmation contenant des indications sur les opérations effectuées.

Selon une autre caractéristique, les messages adressés à l'usager et à l'opérateur contiennent au moins certaines indications différentes.

Avantageusement, les informations échangées entre le terminal et le fabricant utilisent des moyens de modulation permettant de transmettre les données à échanger sur le canal de parole.

La transmission de données numériques sur le canal de parole présente l'avantage d'apporter une sécurité dans la transmission et de permettre au fabricant d'accéder à tous les terminaux même si l'usager n'a pas souscrit aux services de transmission de données.

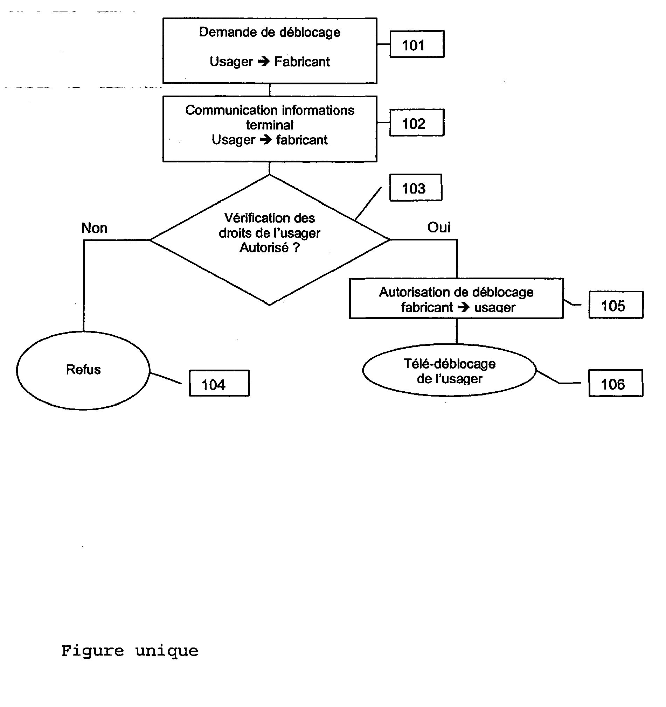

D'autres particularités et avantages de l'invention apparaîtront clairement dans la description suivante, présentée en regard de la figure annexée qui représente un organigramme du procédé selon l'invention.

Selon l'invention, le déblocage est réalisé par le téléphone lui-même sur requête de l'usager. A cette fin, l'information spécifique ou clé de déblocage est envoyée par le fabricant au téléphone concerné.

Ainsi, selon l'invention, le fabricant des téléphones garde dans sa base de données, les clés de déblocage des téléphones qu'il a fabriqué, sans les communiquer aux opérateurs auxquels il a livré ses téléphones.

Ces clés sont toutefois associées dans cette base à des moyens d'identification des téléphones auxquels ils correspondent. On peut utiliser par exemple le numéro de série des téléphone comme information de caractérisation unique (IMEI : numéro d'identité internationale d'équipement mobile).

De son côté l'opérateur peut enregistrer dans sa propre base de données, par exemple là aussi par son numéro de série, l'identification du téléphone qui a été livré un usager particulier.

De manière symétrique, l'usager peut identifier facilement le téléphone qui lui appartient, par exemple par simple lecture de son numéro de série indiqué sur l'appareil.

Selon invention, l'usager qui demande dans une étape 101 le déblocage de son téléphone, communique directement dans une étape 102 cette demande au fabricant du téléphone en y joignant le numéro d'identification du téléphone concerné (numéro de série par exemple).

Cette communication est transparente pour l'opérateur utilisé par l'usager. La communication s'effectuera par une communication téléphonique avec le téléphone lui-même, par exemple en appelant un numéro de téléphone indiqué à côté du numéro de série ou fourni par l'opérateur lors de la demande.

Dans une étape 103, le fabricant vérifie avec l'opérateur les droits de l'usager à demander ce déblocage. Cette opération peut s'effectuer soit manuellement par une communication téléphonique, soit par des moyens plus automatisés de consultation de bases de données. Il faut bien remarquer que dans cette étape l'opérateur n'a pas à consulter des listes de clés de provenance diverses, mais qu'il vérifie simplement ses relations contractuelles avec un usager au sujet d'un téléphone répertorié. La vérification est donc beaucoup plus simple et se termine par un "oui" ou un "non".

Si la réponse est "non", le déblocage est refusé et l'action s'arrête à ce niveau dans une étape de refus 104.

Si la réponse est "oui", dans une étape 105 le fabricant communique directement à l'usager l'ordre de déblocage.

Cette communication s'effectuera là aussi par tout procédé utile, c'est-à-dire le plus souvent par transmission par le réseau téléphonique d'un code de déblocage reçu par le téléphone lui-même et qui procédera au déblocage de celui-ci.

On conçoit bien que la transmission de ce code s'effectuera par l'intermédiaire du réseau géré par l'opérateur, mais celui-ci ne sera là aussi qu'un simple transmetteur passif et l'opération sera transparente pour celui-ci.

À titre de variante de l'invention, le fabricant utilisera pour la transmission de ce code un système sécurisé prévu à l'avance pour éviter tout déblocage par un tiers malveillant.

Le téléphone sera alors débloqué dans une étape finale 106.

Pour éviter au maximum les erreurs et les réclamations, l'invention propose également de transmettre à l'usager, et éventuellement à l'opérateur, un message de confirmation contenant un résumé plus ou moins long des opérations effectuées.

Ce message comprendra au minimum l'indication du déblocage, ou éventuellement du refus de déblocage, du téléphone. Il pourra comprendre aussi des informations complémentaires telles que par exemple les références, horaires par exemple, de la demande de déblocage et de l'action finalement effectuée, et les raisons du refus éventuel. Le cas échéant, le message transmis à l'opérateur sera différent de celui transmis à l'usager afin de préserver la confidentialité de certaines des informations transmises.

Ce message pourra être transmis par tout moyen.

Avantageusement, la transmission des données pourra être faite sous la forme d'une transmission numérique sur le canal de parole au moyen d'un dispositif de modulation des données. Le débit des données et la fréquence porteuse de la modulation seront choisis de manière que la forme du lobe principal du spectre de modulation des données à l'entrée du codeur de parole soit conservée après passage dans le codeur et le décodeur de parole.

Ainsi, le débit sera assez faible et il n'y aura pas de surcoût pour la transmission de données car il ne faut pas d'abonnement particulier pour transmettre des données.

Un autre avantage de cette solution est de permettre à un fabricant d'avoir accès à tous ses terminaux même si l'abonné n'a pas souscrit aux services de transmission de données ("Service Data") ou si son terminal n'était pas compatible.

Cette solution n'empêche pas d'autres solutions possibles. On peut par exemple utiliser un support de transmission tel que le GPRS par exemple.

## Revendications

1. Procédé de déblocage d'un téléphone portable, dans lequel on transmet à ce téléphone une information de déblocage, ledit téléphone portable ayant été bloqué au préalable par introduction dans le téléphone portable d'une clé de blocage de façon à verrouiller le téléphone portable pour une utilisation de services d'un opérateur, **caractérisé en ce qu'**il comporte les étapes suivantes:
- l'usager, via ledit téléphone portable, établit une communication en utilisant un numéro d'appel lié au fabricant et fourni préalablement à l'usager ;
- lors de cette communication, le téléphone portable transmet (101, 102) audit numéro d'appel, sous forme de données numériques comprenant le numéro d'identification du téléphone, une requête de déblocage ;
- l'information de déblocage est envoyée (105), sous forme de données numériques, audit téléphone portable ;
- le téléphone portable procède lui-même (106) au déblocage à l'aide de l'information de déblocage reçue.

2. Procédé selon la revendication 1, **caractérisé en ce qu'**il comporte en outre une étape (103) préalable à l'envoi de l'information de déblocage, lors de laquelle ledit fabricant vérifie auprès de l'opérateur utilisé par l'usager les droits de celui-ci au déblocage.

3. Procédé selon l'une quelconque des revendications 1 et 2, **caractérisé en ce que** la demande de déblocage (101) est adressée par l'usager au fabricant par l'intermédiaire de l'opérateur de manière transparente pour ce dernier.

4. Procédé selon l'une quelconque des revendications 1 à 3, **caractérisé en ce que** l'information de déblocage (105) est adressée par le fabricant à l'usager par l'intermédiaire de l'opérateur de manière transparente pour ce dernier.

5. Procédé selon l'une quelconque des revendications 1 à 4, **caractérisé en ce que** le fabricant adresse à l'usager un message de confirmation contenant des indications sur les opérations effectuées.

6. Procédé selon l'une quelconque des revendications 1 à 5, **caractérisé en ce que** le fabricant adresse à l'opérateur un message de confirmation contenant des indications sur les opérations effectuées.

7. Procédé selon les revendications 5 et 6 prises en combinaison, **caractérisé en ce que** les messages adressés à l'usager et à l'opérateur contiennent au moins certaines indications différentes.

8. Procédé selon l'une quelconque des revendications 1 à 7 dans lequel les informations échangées entre le terminal et le fabricant utilisent des moyens de modulation permettant de transmettre les données à échanger sur le canal de parole.

## Claims

1. A method for unlocking a mobile phone, wherein unlocking information is transmitted to this telephone, which was previously blocked by the introduction of a locking key into the mobile phone in order to prevent the mobile phone from using the services of an operator, **characterized in that** it comprises the following steps:
- the user, via said mobile phone, sets up a call by using a dial number related to the manufacturer and previously provided to the user;
- during this call, the mobile phone transmits (101, 102) to said dial number, in the form of digital data comprising the phone's ID number, a request for unlocking;
- the unlocking information is sent (105) in the form of digital data to said mobile phone;
- the mobile phone itself (106) performs unlocking by means of the unlocking information received.

2. The method according to claim 1, **characterized in that** it further comprises a step (103) prior to sending the unlocking information, during which said manufacturer checks with the user's operator the unlocking privileges of the user.

3. The method according to any of claims 1 and 2, **characterized in that** the request for unlocking (101) is addressed by the user to the manufacturer via the operator in a way which is transparent to the latter.

4. The method according to any of claims 1 to 3, **characterized in that** the unlocking information (105) is addressed by the manufacturer to the user via the operator in a way which is transparent to the latter.

5. The method according to any of claims 1 to 4, **characterized in that** the manufacturer addresses to the user a confirmation message containing indications regarding the operations performed.

6. The method according to any of claims 1 to 5, **characterized in that** the manufacturer addresses to the operator a confirmation message containing indications regarding the operations performed.

7. The method according to claims 5 and 6 in combination, **characterized in that** the messages addressed to the user and the operator contain at least some different indications.

8. The method according to any of claims 1 to 7, wherein the information exchanged between the terminal and the manufacturer use modulation means allowing the data to be exchanged to be transmitted over the voice channel.

## Patentansprüche

1. Verfahren zum Freischalten eines Mobiltelefons, wobei Informationen zum Freischalten an dieses Telefon übertragen werden, das zuvor durch Eingabe eines Sperrschlüssels in das Mobiltelefon blockiert wurde, um das Mobiltelefon für eine Verwendung der Dienste eines Betreibers zu sperren, **dadurch gekennzeichnet, dass** es folgende Schritte umfasst:
- der Benutzer stellt über das Mobiltelefon eine Verbindung her unter Verwendung einer Rufnummer, die mit dem Hersteller zusammenhängt und dem Benutzer zuvor bereitgestellt wurde;
- während dieser Verbindung überträgt das Mobiltelefon (101, 102) in Form von Digitaldaten, welche die Identifizierungsnummer des Telefons umfassen, einen Freischaltantrag an die Rufnummer;
- die Freischaltinformationen werden in Form von Digitaldaten an das Mobiltelefon gesendet (105);
- das Mobiltelefon selber (106) führt das Freischalten anhand der empfangenen Freischaltinformationen aus.

2. Verfahren nach Anspruch 1, **dadurch gekennzeichnet, dass** es ferner einen Schritt (103) vor dem Senden der Freischaltinformationen umfasst, während dem der Hersteller beim Betreiber, den der Benutzer verwendet, die Freischaltrechte des Benutzers überprüft.

3. Verfahren nach einem der Ansprüche 1 und 2, **dadurch gekennzeichnet, dass** der Freischaltantrag (101) vom Benutzer dem Hersteller über den Betreiber zugestellt wird, auf eine Art und Weise, die für diesen transparent ist.

4. Verfahren nach einem der Ansprüche 1 bis 3, **dadurch gekennzeichnet, dass** die Freischaltinformationen (105) vom Hersteller dem Benutzer über den Betreiber zugestellt werden, auf eine Art und Weise, die für diesen transparent ist.

5. Verfahren nach einem der Ansprüche 1 bis 4, **dadurch gekennzeichnet, dass** der Hersteller dem Benutzer eine Bestätigungsnachricht zustellt, die Angaben zu den erfolgten Vorgängen enthält.

6. Verfahren nach einem der Ansprüche 1 bis 5, **dadurch gekennzeichnet, dass** der Hersteller dem Betreiber eine Bestätigungsnachricht zustellt, die Angaben zu den erfolgten Vorgängen enthält.

7. Verfahren nach Anspruch 5 und 6 zusammen genommen, **dadurch gekennzeichnet, dass** die dem Benutzer und dem Betreiber zugestellten Nachrichten mindestens gewisse unterschiedliche Angaben enthalten.

8. Verfahren nach einem der Ansprüche 1 bis 7, wobei die zwischen dem Endgerät und dem Hersteller ausgetauschten Nachrichten Modulationsmittel verwenden, welche die Übertragung der auszutauschenden Daten auf dem Sprachkanal ermöglichen.
